# EUROPÄISCHE PATENTSCHRIFT

(11) **EP 0 747 249 B1**
(45) Veröffentlichungstag und Bekanntmachung des Hinweises auf die Patenterteilung: **09.06.1999**
(21) Anmeldenummer: 96108390.4
(22) Anmeldetag: 25.05.1996
(51) Int. Cl.: B60J 7/05

(54) **Führungskulisse für den Deckel eines Schiebehebedachs**
Guiding rail for sliding and tilting sunroof panel
Rail de guidage pour panneau de toit basculant coulissant

(30) Priorität: 10.06.1995 DE 19521278
(43) Veröffentlichungstag der Anmeldung: 11.12.1996
(73) Patentinhaber: WEBASTO KAROSSERIESYSTEME GmbH, D-82131 Stockdorf (DE)
(72) Erfinder: Igel, Richard, 82110 Germering (DE); Wagner, Wolfgang, 80336 München (DE)
(74) Vertreter: Wiese, Gerhard

(56) Entgegenhaltungen:
- DE-A- 3 726 405
- DE-A- 4 405 742
- DE-U- 9 407 234

## Beschreibung

Die Erfindung betrifft eine Führungskulisse für den Deckel eines Schiebehebedachs gemäß dem Oberbegriff des Patentanspruchs 1.

Eine derartige Führungskulisse ist aus der DE-C1 44 05 742 bekannt. Die bekannte Kulisse weist einen sandwichartigen Aufbau aus einem innenliegenden Kunststoff-Kulissenkörper und vorzugsweise zwei diesen einschließenden metallischen Stützkörpern auf In den Stützkörpern vorgesehene Schlitze werden durch vorspringende Teile des Kulissenkörpers zu einem Führungsschlitz ausgekleidet. Beim Stand der Technik ist nachteilig, daß die Befestigungspunkte für die Befestigung des Deckels an der Führungskulisse (dort Bohrung 23 in Fig. 5) zur Herstellung eines Gewindes lediglich die relativ dünnen Wandstärken der beiden Stützkörper verwenden. Negativ ist zusätzlich, daß in diesem Bereich der relativ weiche Kunststoff-Kulissenkörper für zusätzliche Setzungsmöglichkeiten der Schraubverbindung sorgt.

Es ist Aufgabe der vorliegenden Erfindung, eine Führungskulisse der eingangs genannten Art zu schaffen, die eine zuverlässige Befestigung am Deckel ermöglicht.

Diese Aufgabe ist gemäß der vorliegenden Erfindung dadurch gelöst, daß einer der Stützkörper im Bereich der Befestigungspunkte einen am zweiten Stützkörper anliegenden Vorsprung aufweist, wobei der Kulissenkörper im Bereich der Befestigungspunkte Aussparungen aufweist. Vorteilhafte Ausgestaltungen der Erfindung sind den Unteransprüchen zu entnehmen.

Dadurch, daß ein Vorsprung des zweiten Stützkörpers unmittelbar am ersten Stützkörper anliegt, liegen im Bereich der Befestigungspunkte beide metallischen Stützkörper unmittelbar aneinander und ermöglichen eine stabile Befestigung des Deckels ohne Beeinträchtigung durch das Kunststoffmaterial des Kulissenkörpers.

Vorzugsweise ist der Vorsprung im ersten Stützkörper aus dem Material desselben herausgedrückt. Bei Herstellung des Stützkörpers als Blechstanzteil kann somit dieser Vorsprung unmittelbar mit angeformt werden.

Eine weitere Verbesserung der Stabilität der Schraubverbindungen im Bereich der Befestigungspunkte ergibt sich dadurch, daß der zweite Stützkörper im Bereich der Befestigungspunkte eine nach außen gerichtete zylindrische Durchdrückung mit einem darin vorgesehenen Befestigungsgewinde für den Deckel aufweist. Durch eine derartige Durchdruckung wird die nutzbare Gewindelänge für das Befestigungsgewinde vergrößert.

Für eine Verbindung des Kulissenkörpers mit den Stützkörpern ist es vorteilhaft, wenn beide Stützkörper kongruente Bohrungen aufweisen, durch die am Kulissenkörper angeformte Kunststoff-Nieten nach außen dringen und dort beispielsweise durch Kaltstauchen für eine Verklammerung der drei Komponenten des Sandwichaufbaues der Führungskulisse sorgen.

Es ist ferner vorteilhaft, daß beide Stützkörper an ihrer Unterkante in einem Betätigungsbereich für einen Rasthaken eine nach innen gerichtete Verformung aufweisen, durch die der Kulissenkörper umgriffen wird. Eine solche Verformung läßt sich ebenfalls vorteilhaft beim Stanzen in einem Arbeitsgang mit einprägen. Durch die nach innen gerichtete Verformung liegen beide Stützkörper in diesem Bereich aneinander an und wirken somit stets gemeinsam auf den federn gelagerten Rasthaken ein, sodaß eine einseitige Abnutzung eines der Stützkörper hierdurch wirksam verhindert wird.

Es ist ferner vorteilhaft, wenn der Kunststoffkörper am hinteren Teil der Führungskulisse ab dem hinteren Befestigungspunkt ausgespart ist und zwischen den Stützkörpern einen Spalt zum Einbringen einer Feder freilegt. Eine derartige Feder dient zur Anlenkung einer unterhalb der Hinterkante des Deckels mit diesem verschiebbar angeordneten Wasserrinne.

Zur Vorbeugung von Klappergeräuschen ist es vorteilhaft, wenn der Kunststoffkörper an der Unterseite der Führungskulisse mit einem zungenartigen federnden Teil aus den Stützkörpern hervortritt. Ein solches federndes Teil kann in einfacher Weise unmittelbar aus dem Kunststoffmaterial des Kulissenkörpers heraus geformt werden. Es legt sich bei montiertem Deckel auf einem Teil der Betätigungsmechanik des Deckels ab und verhindert somit die ansonsten bei unmittelbarem Anliegen von Metall auf Metall möglichen Klappergeräusche.

Aufgrund der Ausgestaltung der Stützkörper im Bereich der Befestigungspunkte ist es möglich, die Führungskulisse auf eine Dicke von vorzugsweise 4 mm zu reduzieren, wobei die Dicke des Kulissenkörpers etwa 1 mm beträgt. Eine derartige Führringskulisse ist kompakt und hat sich dennoch als hinreichend stabil für eine zuverlässige Deckelbetätigung erwiesen.

Nachfolgend ist ein Ausführungsbeispiel der Erfindung beschrieben. Es zeigt:

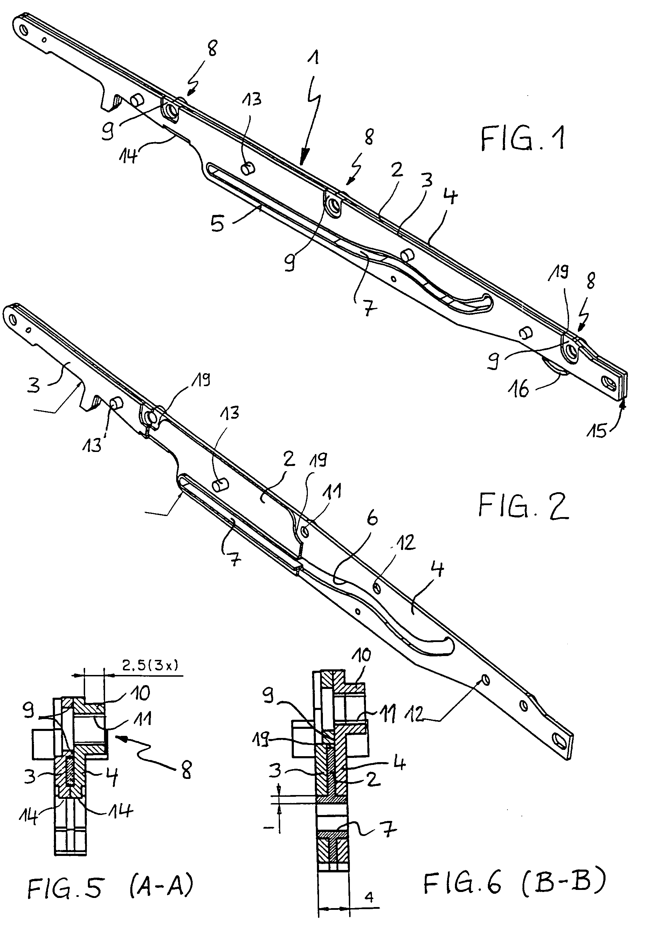

- Fig. 1: eine perspektivische Seitenansicht einer Führungskulisse,
- Fig. 2: die Ansicht gemäß Fig. 1 mit teilweise aufgebrochenem Kulissenkörper und erstem Stützkörper,
- Fig. 3: eine Seitenansicht der Führungskulisse,
- Fig. 4: eine Draufsicht auf die Führungskulisse,
- Fig. 5: einen Querschnitt im Bereich des vorderen Befestigungspunktes (Schnitt A-A in Fig. 3) und
- Fig. 6: einen Querschnitt im Bereich des mittleren Befestigungspunktes (Schnitt B-B in Fig. 3)

Die Führungskulisse 1 dient zur Befestigung nahe der beiden seitlichen Längskanten eines Deckels eines Schiebehebedachs. Die dargestellte Führungskulisse 1 befindet sich in Fahrtrichtung des Fahrzeuges auf der rechten Seite des Deckels; die auf der linken Deckelseite angeordnete Führungskulisse ist zu dieser spiegelsymmetrisch ausgebildet.

Die Führungskulisse 1 setzt sich aus einem aus Kunststoff ausgebildeten Kulissenkörper 2 und aus zwei diesen Kulissenkörper 2 von beiden Seiten abdeckenden Stützkörpern 3 bzw. 4 zusammen. Kulissenkörper 2 und Stützkörper 3 bzw. 4 liegen über weite Teile ihrer Erstreckung flächig aneinander. Der innenliegende erste Stützkörper 3 weist einen Schlitz 5 und der außenliegende zweite Stützkörper 4 einen dazu kongruenten Schlitz 6 auf. Im Bereich dieser Schlitze 5 bzw. 6 weist der Kulissenkörper 2 eine zu beiden Seiten vorstehende Verbreiterung auf, die sich in die Schlitze 5 bzw. 6 hinein erstreckt und an deren Wandungen anlegt. Innerhalb der Verbreiterung ist am Kulissenkörper 2 ein Führungsschlitz 7 ausgebildet. Der Führungsschlitz 7 dient zur Führung eines nicht dargestellten Kulissenstiftes, der an einem nicht dargestellten, in seitlichen Führungsschienen geführten Betätigungsmechanismus für den Deckel befestigt ist.

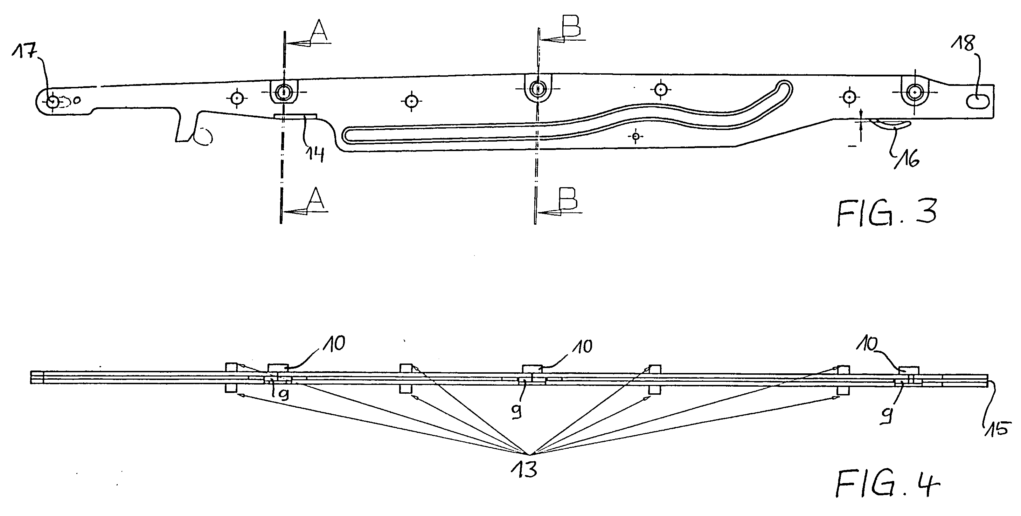

Im Bereich der Oberkante der Führungskulisse 1 sind voneinander beabstandet drei Befestigungspunkte 8 vorgesehen. In diesen Bereichen weist der Kulissenkörper 2, wie insbesondere aus den Fign. 2 und 5 bis 6 zu ersehen, Aussparungen 19 auf. Am ersten Stützkörper 3 sind in den Bereichen der Befestigungspunkte 8 Vorsprünge 9 ausgebildet, die unmittelbar aus dem Material des Stützkörpers 3 nach außen herausgedruckt sind und sich mit ihrer äußeren Fläche an die Innenseite des zweiten Stützkörpers 4 anlegen. Der zweite Stützkörper 4 weist im Bereich der Befestigungspunkte 8 nach außen vorspringende zylindrische Durchdrückungen 10 auf, in welche Befestigungsgewinde 11 eingeschnitten sind. Mittels der Durchdrückungen 10 wird, wie aus Fig. 5 ersichtlich, die nutzbare Länge der Befestigungsgewinde 11 bei einer Materialstärke der Stützkörper 3 bzw. 4 von 1,5 mm um 2,5 mm auf insgesamt 4 mm verlängert. Durch die unmittelbar Anlage des ersten Stützkörpers 3 mittels des Vorsprunges 9 am zweiten Stützkörper 4 ist eine sichere Verschraubung des Deckels im Bereich der Befestigungspunkte 8 gewährleistet.

Das die Führungskulisse 1 bildende sandwichartige Paket aus den beiden außenliegenden Stützkörpern 3 bzw. 4 und dem dazwischenliegenden Kulissenkörper 2 wird vorzugsweise durch Kunststoff-Niete 13 zusammengehalten, welche unmittelbar am Kulissenkörper 2 mit angeformt sind, und welche kongruente Bohrungen 12 in den Stützkörpern 3 bzw. 4 durchdringen. Die Kunststoff-Niete 13 sind vorzugsweise durch Kaltstauchen verformt und halten dadurch die Führungskulisse 1 zusammen.

Im Bereich des hinteren Endes der Führungskulisse 1 ist der Kulissenkörper 2 ab dem hinteren Befestigungspunkt 8 ausgespart. Dadurch wird, wie aus Fig. 4 ersichtlich, zwischen den Stützkörpern 3 bzw. 4 ein Schlitz 15 freigegeben, in welchen ein nicht dargestelltes Federteil eingeführt und am Langloch 18 befestigt wird, welches zur Anlenkung einer unterhalb der Hinterkante des Deckels angeordneten nicht dargestellten Wasserrinne dient. Die Bohrung 17 am vorderen Ende der Führungskulisse 1 dient zur Befestigung an einer Schwenkachse, die an einem vorderen, in Führungsschienen geführten Gleitschuh befestigt ist.

### Bezugszeichenliste

- 1: Führungskulisse
- 2: Kulissenkörper
- 3: erster Stützkörper
- 4: zweiter Stützkörper
- 5: Schlitz (in 3)
- 6: Schlitz (in 4)
- 7: Führungsschlitz (in 2)
- 8: Befestigungspunkt
- 9: Vorsprung (an 3)
- 10: Durchdruckung (an 4)
- 11: Befestigungsgewinde
- 12: Bohrungen
- 13: Kunststoff-Niete
- 14: Verformung
- 15: Spalt
- 16: federndes Teil
- 17: Bohrung
- 18: Langloch
- 19: Aussparung (in 2)

## Patentansprüche

1. Führungskulisse (1) für den Deckel eines Schiebehebedaches, die wenigstens einen metallenen Stützkörper (3,4) aufweist, an dem wenigstens zwei Befestigungspunkte (8) für den Deckel vorgesehen sind und in dem ferner ein Schlitz (5,6) zur Aufnahme eines Kulissenkörpers (2) aus Kunststoff angeordnet ist, der seinerseits einen Führungsschlitz (7) für einen darin verschiebbaren Kulissenstift eines Deckelbetätigungsmechanismus umfaßt, **dadurch gekennzeichnet**, daß zu beiden Seiten des Kulissenkörpers (2) je ein metallener Stützkörper (3,4) angeordnet ist, von denen wenigstens einer (3) im Bereich der Befestigungspunkte (8) einen am zweiten Stützkörper (4) anliegenden Vorsprung (9) aufweist, wobei der Kulissenkörper (2) im Bereich der Befestigungspunkte (8) Aussparungen (19) aufweist.

2. Führungskulisse nach Anspruch 1, **dadurch gekennzeichnet**, daß der Vorsprung (9) aus dem Material des Stützkörpers (3) herausgedrückt ist.

3. Führungskulisse nach Anspruch 1 oder 2, **dadurch gekennzeichnet**, daß der zweite Stützkörper (4) im Bereich der Befestigungspunkte (8) eine nach außen gerichtete zylindrische Durchdrückung (10) mit einem darin vorgesehenen Befestigungsgewinde (11) für den Deckel aufweist.

4. Führungskulisse nach einem der vorhergehenden Ansprüche, **dadurch gekennzeichnet,** daß beide Stützkörper (3,4) kongruente Bohrungen (12) aufweisen, durch die am Kulissenkörper (2) angeformte Kunststoff-Nieten (13) nach außen dringen.

5. Führungskulisse nach einem der vorhergehenden Ansprüche, **dadurch gekennzeichnet**, daß beide Stützkörper (3,4) an der Unterkante in einem Betätigungsbereich für einen Rasthaken eine nach innen gerichtete Verformung (14) aufweisen, durch die der Kulissenkörper (2) umgriffen wird.

6. Führungskulisse nach einem der vorhergehenden Ansprüche, **dadurch gekennzeichnet**, daß der Kunststoffkörper (2) am hinteren Ende der Führungskulisse ab dem hinteren Befestigungspunkt (8) ausgespart ist und zwischen den Stützkörpern (3,4) einen Spalt (15) zum Einbringen einer Feder freilegt.

7. Führungskulisse nach einem der vorhergehenden Ansprüche, **dadurch gekennzeichnet**, daß der Kunststoffkörper (2) an der Unterseite der Führungskulisse mit einem zungenartigen federnden Teil (16) aus den Stützkörpern (3,4) hervortritt.

8. Führungskulisse nach einem der vorhergehenden Ansprüche, **dadurch gekennzeichnet**, daß deren Dicke etwa 4 mm beträgt, wobei die Dicke des Kulissenkörpers (2) etwa 1 mm beträgt.

## Claims

1. A guide rail (1) for the cover of a slide-and-tilt roof, comprising at least one metal supporting member (3, 4) on which there are at least two fixing points (8) for the cover and in which there is furthermore a slot (5, 6) to receive a rail member (2) of synthetic plastics material and which, for its part, comprises a guide slot (7) for a pin of a cover actuating mechanism displaceable therein, characterised in that on both sides of the rail member (2) there is a metal supporting member (3, 4) of which at least one (3) has in the region of the fixing points (8) a projection (9) which bears on the second supporting member (4), the rail member (2) having recesses (19) in the area of the fixing points (8).

2. A guide rail according to Claim 1, characterised in that the projection (9) is pressed out of the material of the support member (3).

3. A guide rail according to Claim 1 or 2, characterised in that the second support member (4) has in the area of the fixing points (8) an outwardly directed cylindrical pressed-through portion (10) with, provided in it, a screw thread for fixing the cover.

4. A guide rail according to one of the preceding Claims, characterised in that both support members (3, 4) have congruent bores (12) through which synthetic plastics rivets (13) integrally formed on the rail member (2) penetrate outwardly.

5. A guide rail according to one of the preceding Claims, characterised in that both support members (3, 4) have on the bottom edge, in an actuating area for an engaging hook, an inwardly directed shaped portion (14) adapted to engage around the rail member (2).

6. A guide rail according to one of the preceding Claims, characterised in that the synthetic plastics body (2) is recessed at the rear end of the guide rail, from the rear fixing point (8) onwards, and exposes between the support members (3, 4) a gap (15) for the incorporation of a spring.

7. A guide rail according to one of the preceding Claims, characterised in that the synthetic plastics body (2) has a tongue-like springing part (16) by which it protrudes from the support members (3, 4) on the underside of the guide rail.

8. A guide rail according to one of the preceding Claims, characterised in that its thickness is about 4 mm, the thickness of the rail member (2) being about 1 mm.

## Revendications

1. Rail (1) de guidage pour panneau de toit basculant et coulissant, comprenant un corps de soutien métallique (3, 4) muni d'au moins deux points de fixation (8) du panneau et dans lequel se trouve de plus une fente (5, 6) pour y loger un corps de coulisse (2) en matière plastique présentant lui-même une fente de guidage (7) dans laquelle peut se déplacer une tige de coulisse appartenant à un mécanisme de manoeuvre du couvercle,
caractérisé en ce que
sur chacun des côtés du corps de coulisse (2) se trouve un corps de soutien métallique (3, 4) dont l'un au moins présente, dans la zone des points de fixation (8), une saillie (9) en appui sur le second corps de soutien (4), le corps de coulisse (2) présentant des évidements (19) dans la zone des points de fixation (8).

2. Rail de guidage selon la revendication 1,
caractérisé en ce que
la saillie (9) est réalisée par repoussage du matériau constituant le corps de soutien (3).

3. Rail de guidage selon la revendication 1 ou 2,
caractérisé en ce que
le second corps de soutien (4) comporte, dans la zone des points de fixation (8), une partie cylindrique extrudée (10) dirigée vers l'intérieur et présentant, intérieurement, un filetage (11) de fixation du panneau.

4. Rail de guidage selon l'une quelconque des revendications précédentes,
caractérisé en ce que
les deux corps de soutien (3, 4) présentent des perçages (12) congruents dans lesquels pénètrent, en direction de l'extérieur, des rivets en matière plastique (13) moulés sur le corps de coulisse (2).

5. Rail de guidage selon l'une quelconque des revendications précédentes,
caractérisé en ce que
chacun des deux corps de soutien (3, 4) présente, le long de son bord inférieur, dans une zone d'action d'un crochet d'arrêt, une partie (14) déformée vers l'intérieur, en prise extérieurement sur le corps de coulisse (2).

6. Rail de guidage selon l'une quelconque des revendications précédentes,
caractérisé en ce que
le corps (2) en matière plastique, à l'extrémité arrière de la coulisse de guidage, est évidé à partir des points de fixation arrière (8) et entre les deux corps de soutien (3, 4) se trouve une fente (15) d'introduction d'un ressort.

7. Rail de guidage selon l'une quelconque des revendications précédentes,
caractérisé en ce que
le corps (2) en matière plastique, sur le côté inférieur de la coulisse de guidage, comporte une partie élastique (16) en forme de languette sortant des corps de soutien (3, 4).

8. Rail de guidage selon l'une quelconque des revendications précédentes,
caractérisé en ce que
son épaisseur est d'environ 4 mm, celle du corps de coulisse (2) étant d'environ 1 mm.
